# EUROPEAN PATENT APPLICATION

(11) **EP 4 524 997 A1**
(43) Date of publication of application: **19.03.2025**
(21) Application number: 23197171.4
(22) Date of filing: 13.09.2023
(51) Int. Cl.: H01B 1/24

(54) **ELECTRICALLY CONDUCTIVE COMPOSITION**

(71) Applicant: Henkel AG & Co. KGaA, 40589 Düsseldorf (DE)
(72) Inventor: Fleck-Kunde, Tom, 40225 Düsseldorf (DE); Buga, Duygu, 41564 Kaarst (DE); Franken, Uwe, 41542 Dormagen (DE); Goethel, Frank, 09125 Chemnitz (DE); Oldenzijl, Rudolf, 9468BB Annen (NL)

(57) **Abstract**

The present invention relates to an electrically conductive composition comprising a) a nitrocellulose resin; b) electrically conductive particles comprising graphite and carbon black, wherein ratio of the graphite and the carbon black is from 1:1 to 5:1; c) a solvent; and d) a di- or multi-functional isocyanate, where in ratio of the electrically conductive particles and the resin is from 0.20:1 to 4:1. The compositions according to the present invention can be used as a structural adhesives or to generate an electrically conductive surface onto a non-conductive substrate.

## Description

### Technical field of the invention

The present invention relates to an electrically conductive composition which can be used to generate an electrically conductive surface onto a non-conductive substrate.

### Technical background of the invention

Ordinary electrically conductive inks and compositions have been applied onto the substrates to generate an electrically conductive surface. Often these compositions are silver based and require relatively high curing temperatures (>120°C) and therefore are not suitable for more delicate materials.

Therefore, there is a need for an electrically conductive composition, which can be an be used as a structural adhesive and/or to generate an electrically conductive surface onto a non-conductive substrate without damaging the substrate.

### Summary of the invention

The present invention relates to an electrically conductive composition comprising a) a nitrocellulose resin; b) electrically conductive particles comprising graphite and carbon black, wherein ratio of the graphite and the carbon black is from 1:1 to 5:1; c) a solvent; and d) a di- or multi-functional isocyanate, where in ratio of the electrically conductive particles and the resin is from 0.20:1 to 4:1.

The present invention encompasses an electrically conductive film comprising an electrically conductive composition according to the present invention.

The present invention encompasses use of an electrically conductive composition or an electrically conductive film according to the present invention as a structural adhesive or to generate an electrically conductive surface onto a non-conductive substrate.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skills in the art to which this invention belongs to. By means of further guidance, term definitions are included to better appreciate the teaching of the present invention.

The present invention relates to an electrically conductive composition comprising a) a nitrocellulose resin; b) electrically conductive particles comprising graphite and carbon black, wherein ratio of the graphite and the carbon black is from 1:1 to 5:1; c) a solvent; and d) a di- or multi-functional isocyanate, where in ratio of the electrically conductive particles and the resin is from 0.20:1 to 4:1.

The applicant has found out that composition according to the present invention provides electrically conductive coating having high electrical conductivity, low curing temperature which enables coating of more delicate substrates. The composition according to the present invention can also be used as a structural adhesive. Additional to high cohesive properties, resulting from the reactive curing component, the composition according to the present invention retains its high adhesion to plastic, which is often considered challenging for the structural adhesives.

The electrically conductive composition according to the present invention comprises a resin. Suitable resin for use in the present invention is a nitrocellulose resin.

The nitrocellulose resin is preferred resin because it releases the solvent easily and disperse well the electrically conductive particles. Further, the nitrocellulose resin provides low resistance and high conductivity.

Suitable commercially available nitrocellulose resin for use in the present invention include but is not limited to NC-E560 IPA 30% from Dow Chemical.

The nitrocellulose resin may be present in an electrically conductive composition according to the present invention in an amount from 2 to 25% by weight of the total weight of the composition, preferably from 3 to 23%, and more preferably from 4 to 21%.

When the quantity of the nitrocellulose resin exceeds 25% the viscosity of the composition may increase to high, whereas too low quantity, less than 2% may lead to a poor coating, low viscosity and settling of the resin and electrically conductive particles.

The electrically conductive composition according to the present invention comprises electrically conductive particles. The electrically conductive particles comprise a mixture of graphite and carbon black. The ratio of the graphite and the carbon black is from 1:1 to 5:1.

The Applicant has found out that good results can be achieved by using a combination of graphite and carbon black as electrically conductive particles. The combination of electrically conductive particles provides good conductivity in thin layers.

Suitable graphite for use in the present invention has preferably a particle size D90 from 1 µm to 75 µm, more preferably from 2 µm to 45 µm, more preferably from 3 µm to 25 µm and even more preferably 3 µm to 10 µm. Wherein the particle size is measured by laser diffraction. In this method a laser beam lights up a cell which contains the sample of graphite suspended in water, the generated diffraction pattern is collected by the system and analysed using the light scattering developed by Mie. The particle size distribution is calculated and reported for quantity of 90%.

In addition to particle size D90, or as an alternative feature of suitable graphite for use in the present invention is a specific surface area preferably from 0.25 m²/g to 25 m²/g, more preferably from 4 m²/g to 22 m²/g and more preferably from 7 m²/g to 21 m²/g, wherein the specific surface area is measured by B.E.T nitrogen absorption. The measurement is carried out by measuring the adsorption-desorption isotherm of nitrogen on the surface of the material by means of the Brunauer-Emmet-Teller algorithm, a definite amount (accuracy 0.01mg) of powder is weighted in a sample tube. Subsequently the sample undergoes a series of heating and cooling runs from the evolution of the pressure in the sample tube and the amount of adsorbed nitrogen during different step is calculated; from this data the specific surface area is calculated and reported in m²/g.

In a preferred embodiment the graphite has a particle size D90 from 1 µm to 75 µm, preferably from 2 µm to 45 µm, more preferably from 3 µm to 25 µm and even more preferably 3 µm to 10 µm and/or a specific surface area from 0.25 m²/g to 25 m²/g, preferably from 4 m²/g to 22 m²/g and more preferably from 7 m²/g to 21 m²/g, wherein the particle size is measured by laser diffraction, and wherein the specific surface area is measured by B.E.T nitrogen absorption.

Preferred specific surface areas and particle sizes of a graphite as separate features or as a combination provide low resistance and good conductivity in thin layers.

Generally, too large particle size of a graphite may lead to a lower specific surface area and difficulties to release the particles from the cells during the printing process. Whereas too small particle size of a graphite may be too expensive to produce, and have larger specific surface area, which may lead to a higher viscosity.

Lower graphite specific surface area than 0.25 m²/g may lead to decrease of conductivity, whereas higher specific surface area than 25 m²/g may lead problems with viscosity of the composition and additionally, would not be cost effective component.

Suitable commercially available graphite for use in the present invention include but are not limited to Timrex SFG6 from TIMCAL Graphite & Carbon and Graphite pure 200-09 from Asbury.

Suitable carbon black for use in the present invention has preferably an oil absorption number from 70 ml/100g to 500 ml/100g, more preferably from 100 ml/100g to 300 ml/100g and more preferably from 150 ml/100g to 200 ml/100g, wherein the oil absorption number is measured according to ASTM D2414.

In addition to oil absorption number, or as an alternative feature suitable carbon black for use in the present invention has a specific surface area preferably from 30 m²/g to 1400 m²/g, more preferably from 100 m²/g to 700 m²/g and more preferably from 150 m²/g to 350 m²/g, wherein the specific surface area is measured according by BET. The method is based on the registration of the absorption of nitrogen at 77K. Following the model proposed by Brunauer, Emmet and Teller (BET), the monolayer capacity can be determined. On the basis of the cross-sectional area of the nitrogen molecule, the monolayer capacity and the weight of the sample, the specific surface can then be calculated.

In a preferred embodiment the carbon black has an oil absorption number from 70 ml/100g to 500 ml/100g, preferably from 100 ml/100g to 300 ml/100g and more preferably from 150 ml/100g to 200 ml/100g, and/or a specific surface area from 30 m²/g to 1400 m²/g, preferably from 100 m²/g to 700 m²/g and more preferably from 150 m²/g to 350 m²/g, wherein the oil absorption number is measured according to ASTM D2414, and wherein the specific surface area is measured according by BET. Preferred specific surface areas and oil absorption numbers separate or as a combination provide a low resistance in thin layers.

When the oil absorption number of the carbon black is too low, it means less branched carbon black, and therefore, there may be fewer contact points in thin layers, and this will adversely affect conductivity, whereas too high oil absorption number of the carbon black, mainly greater than 500, may cause difficulties in processing.

When the specific surface area size of the carbon black is too small, mainly less than 30, this may lead to a poor conductivity, whereas too high specific surface area of the carbon black, mainly more than 1400, may lead difficulties in processing.

Suitable commercially available carbon black for use in the present invention include but are not limited to Vulcan XC72 from Cabot and Ensaco 250G from Imerys.

According to the present invention ratio of the graphite and the carbon black is from 1:1 to 5:1, preferably from 2:1 to 4:1, and more preferably ratio of the graphite and the carbon black is 3:1.

The Applicant has found out that these graphite to carbon black ratios provide ideal viscosity and conductivity properties to the composition according to the present invention. It has been found that too high carbon black concentration in relation to graphite may lead thicker printed layers. Further, if the quantity of the carbon black is too high, viscosity of the composition may increase too high.

Electrically conductive particles may be present in an electrically conductive composition according to the present invention in an amount from 3 to 45% by weight of the total weight of the composition, preferably from 4 to 43%, and more preferably from 4.75 to 41%.

When the quantity of the electrically conductive particles is too low, mainly less than 3%, the quantity may not provide desired conductivity, whereas too high quantity, mainly more than 45%, may lead difficulties to process the composition.

The Applicant has found out that particularly good properties are obtained when the ratio of the electrically conductive particles and the resin is from 0.20:1 to 4:1, preferably from 0.25:1 to 3:1.

The Applicant has found that this ratio of electrically conductive particles and resin provides good viscosity and good conductivity properties.

The electrically conductive composition according to the present invention comprises a solvent. The composition may comprise one solvent or mixture or two or more solvents.

In a preferred embodiment the solvent is selected from the group consisting of toluene, ethanol, isopropyl alcohol, n-propanol, ethyl acetate, n-propyl acetate, n-butyl acetate, isobutyl acetate, isopropyl acetate, methyl ethyl ketone, methyl isobutyl ketone, 2-butoxy ethyl acetate, water, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetate, dipropylene glycol (mono)methyl ether, glycol ethers, ethoxy propanol, water and mixtures thereof, and mixtures thereof, preferably solvent is 2-butoxy ethyl acetate.

These solvents are preferred because they dissolve the resin well, and lead to uniform film formation after evaporation.

Suitable commercially available solvent for use in the present invention include but is not limited to 2-butoxy ethyl acetate from Eastman.

The solvent may be present in an electrically conductive composition according to the present invention in an amount from 40 to 92% by weight of the total weight of the composition, preferably from 45 to 91%, and more preferably from 46 to 90%.

If the solvent quantity is lower than 40%, the viscosity of the composition may increase too high, whereas higher quantity, more than 90% may adversely affect the conductivity of the composition.

The composition according to the present invention comprise a di- or multi-functional isocyanate. The isocyanate may be an aliphatic isocyanate or an aromatic isocyanate.

Preferably the di- or multi-functional isocyanate is selected from the group consisting of methylene diphenyl diisocyanate, hexamethylene diisocyanate, toluene diisocyanate, 1,5-naphthalene diisocyanate, isophorone diisocyanate, xylylene diisocyanate, paraphenylene diisocyanate, 1,3, 6-hexamethylene triisocyanate, and bicycloheptane triisocyanate and mixtures thereof, preferably the di- or multi-functional isocyanate is methylene diphenyl diisocyanate.

Use of a di- or multi-functional isocyanate results a cross-linking of the resin and an increase in cohesion strength.

Suitable commercially available di- or multi-functional isocyanate for use in the present invention include but is not limited to Desmodur VKS 20 from Covestro.

The di- or multi-functional isocyanate may be present in an electrically conductive composition according to the present invention in an amount from 0.5 to 9% by weight of the total weight of the composition, preferably from 0.5 to 7%, and more preferably from 0.75 to 6%.

These quantities are preferred because they provide ideal crosslinking level. When the quantity of di- or multi-functional isocyanate is more than 9% it may have a detrimental effect on moisture resistance and shelf life.

The electrically conductive composition according to the present invention may be prepared by mixing all components together. The electrically conductive composition according to the present invention is preferably prepared by a pebble mill or tri roll mill processes. In the pebble mill process the electrically conductive particles, a resin, a solvent, and a di- or multi-functional isocyanate are being grinded by pebbles for about 15 hours in a large mill. In the tri roll mill process the electrically conductive particles, a resin, a solvent, and a di- or multi-functional isocyanate are being are being crushed down to a defined particle size between three rolls turning against each other.

In one aspect of the invention, an electrically conductive film can be formed comprising the electrically conductive composition according to the present invention.

The electrically conductive film according to the present invention has one or more layers, wherein each layer has a thickness from 5 µm to 100 µm, preferably from 7 µm to 80 µm, and more preferably from 8 to 60 µm.

Thin layers are desired due the cost-effective aspect but are also desired in a process point view. However, the thicker layers increase the cohesion forces that can be exhibited from the adhesive.

The electrically conductive composition according to the present invention is preferably applied via bar coating, stencil printing, screen printing, rotogravure printing, roto screen printing, flexographic printing, and using spray coating applications to form a film.

The electrically conductive composition according to the present invention has preferably viscosity from 0.3 to 30 Pa·s, wherein the viscosity is measured according with ISO 3219 using a rheometer at a constant shear rate of 15-s with a 20 mm plate-plate configuration (0.2 mm gap, 60 sec, at 25 °C).

Particularly suitable viscosity for screen- and roto screen printing is preferably within the range of from 2 to 30 Pa·s.

Particularly suitable viscosity for rotogravure or flexographic printing, a suitable viscosity is within the range of from 0.5 to 4 Pa s.

The Applicant has found that this viscosity range is ideal for the production process used to produce the electrically conductive composition according to the present invention and in addition, this viscosity range prevents composition settling during the storage.

The electrically conductive composition according to the present invention has preferably a sheet resistance from 5 to 100 Ohm/sq/mil, preferably from 7 to 50 Ohm/sq/mil, and more preferably from 10 to 30 Ohm/sq/mil wherein the sheet resistance is measured according to ASTM D257.

These sheet resistance values are preferred because they may ensure equal values than aluminium surfaces provide.

The electrically conductive composition according to the present invention has preferably a lap shear strength from 4 to 15 MPa, preferably from 6 to 12 MPa, wherein the lap shear strength is measured according to ISO 4587-03.

The electrically conductive composition according to the present invention can be cured at temperature from 23 to 120°C, preferably from 40 to 80°C.

Low cure temperatures enable the use of more delicate non-conductive substrates.

The present invention encompasses use of an electrically conductive composition or an electrically conductive film according to the present invention to generate an electrically conductive surface onto a non-conductive substrate.

Suitable non-conductive substrates for use in the present invention are for example Kalix, polybutylene terephthalate (PBT), e-coated steel, polyethylene terephthalate (PET) and PET-wrapped metal substrates.

The electrically conductive composition according to the present invention may also be used as a structural adhesive.

### Examples

Composition details are listed in table 1 below. The compositions were prepared by mixing the components together by mixing at 2000 rpm for 60 seconds.

**Table 1**

| Component | Comparative example 1 | Example 1 | Example 2 | Example 3 |
|---|---|---|---|---|
| NC E 560 from Dow Chemical | 9.73 | 9.6327 | 9.4381 | 9.2435 |
| 2-butoxyethyl acetate from Eastman | 66.1 | 65.439 | 64.117 | 62.795 |
| Isopropyl alcohol from Dow Chemical | 4.17 | 4.1283 | 4.0449 | 3.9615 |
| Graphite pure 200-09 from Asbury | 15 | 14.85 | 14.55 | 14.25 |
| Vulcan XC 72 from Cabot | 5 | 4.95 | 4.85 | 4.75 |
| Desmodur VKS 20 from Covestro | 0 | 1 | 3 | 5 |
| Total | 100 | 100 | 100 | 100 |

Lap shear strength was measured to the example compositions according to ISO 4587-03.

The compositions of the examples from the table 1 were applied via bar coating to a non-conductive surface. Alternatively, a pre-cured adhesive with a wet thickness of 25 - 200 µm were applied to a non-conductive surface. A second surface was applied to a top of the electrically conductive coating. The electrically conductive coating was subsequently cured at 60 - 120 °C for 15 - 120 minutes. The test results are listed in table 2 below.

**Table 2**

| Example | Lap shear (MPa) |
|---|---|
| Comparative example | 3.662 |
| Example 1 | 8.99 |
| Example 2 | 11.9 |
| Example 3 | 15.2 |

The compositions according to the present invention exemplify good adhesion strength compared to a comparative composition.

The sheet resistance was measured to the example compositions according to ASTM D257.

The compositions from table 1 were applied via screen printing (wet thickness 13-17µm) onto PET films as thin rectangles of 2 x 100 mm. After curing the compositions for 15 mins at 120°C the resistance of the rectangles was measured. The test results are listed in table 3 below.

**Table 3**

| Example | Sheet resistance (Ohm/sq/mil) |
|---|---|
| Comparative example | 12 |
| Example 1 | 15 |
| Example 2 | 17 |
| Example 3 | 20 |

The compositions according to the present invention exemplify that the resistance is only influenced very minorly and is still very high in comparison to the large impact on cohesion gain.

## Claims

**1.** An electrically conductive composition comprising
a) a nitrocellulose resin;
b) electrically conductive particles comprising graphite and carbon black, wherein ratio of the graphite and the carbon black is from 1:1 to 5:1;
c) a solvent; and
d) a di- or multi-functional isocyanate,
where in ratio of the electrically conductive particles and the resin is from 0.20:1 to 4:1.

**2.** An electrically conductive composition according to claim 1, wherein the resin is present from 2 to 25% by weight of the total weight of the composition, preferably from 3 to 23%, and more preferably from 4 to 21%.

**4.** An electrically conductive composition according to any of claims 1 to 3, wherein the graphite has particle size D90 from 1 µm to 75 µm, preferably from 2 µm to 45 µm, more preferably from 3 µm to 25 µm and even more preferably 3 µm to 10 µm,
and/or
specific surface area from 0.25 m²/g to 25 m²/g, preferably from 4 m²/g to 22 m²/g and more preferably from 7 m²/g to 21 m²/g,
wherein the particle size is measured by laser diffraction, and wherein the specific surface area is measured by B.E.T nitrogen absorption.

**5.** An electrically conductive composition according to any of claims 1 to 4, wherein the carbon black has an oil absorption number from 70 ml/100g to 500 ml/100g, preferably from 100 ml/100g to 300 ml/100g and more preferably from 150 ml/100g to 200 ml/100g,
and/or
specific surface area from 30 m²/g to 1400 m²/g, preferably from 100 m²/g to 700 m²/g and more preferably from 150 m²/g to 350 m²/g,
wherein the oil absorption number is measured according to ASTM D2414, and wherein the specific surface area is measured according by BET.

**6.** An electrically conductive composition according to any of claims 1 to 5, wherein the ratio of the graphite and the carbon black is from 2:1 to 4:1, preferably the ratio is 3:1.

**7.** An electrically conductive composition according to any of claims 1 to 6, wherein the electrically conductive particles are present from 3 to 45% by weight of the total weight of the composition, preferably from 4 to 43%, and more preferably from 4.75 to 41%.

**8.** An electrically conductive composition according to any of claims 1 to 7, wherein the ratio of the electrically conductive particles and the resin is from 0.25:1 to 3:1

**9.** An electrically conductive composition according to any of claims 1 to 8, wherein the solvent is selected from the group consisting of toluene, ethanol, isopropyl alcohol, n-propanol, ethyl acetate, n-propyl acetate, n-butyl acetate, isobutyl acetate, isopropyl acetate, methyl ethyl ketone, methyl isobutyl ketone, 2-butoxy ethyl acetate, water, 2-(2-butoxyethoxy)ethanol, [2-(2-butoxyethoxy)-ethyl]acetate, 2-butoxyethanol, isophorone, 3,3,5-trimethyl-2-cyclohexene-1-one, dimethyl succinate, dimethyl glutarate, dimethyl adipate, acetic acid, 1-methoxypropan-2-ol, 1-methoxy-2-propylacetate, dipropylene glycol (mono)methyl ether, glycol ethers, ethoxy propanol, water and mixtures thereof, preferably solvent is 2-butoxy ethyl acetate.

**10.** An electrically conductive composition according to any of claims 1 to 9, wherein the solvent is present from 40 to 92% by weight of the total weight of the composition, preferably from 45 to 91%, and more preferably from 46 to 90%.

**11.** An electrically conductive composition according to any of claims 1 to 10, wherein the di- or multi-functional isocyanate is aliphatic or aromatic isocyanate, preferably selected from the group consisting of methylene diphenyl diisocyanate, hexamethylene diisocyanate, toluene diisocyanate, 1 ,5-naphthalene diisocyanate, isophorone diisocyanate, xylylene diisocyanate, paraphenylene diisocyanate, 1,3, 6-hexamethylene triisocyanate, and bicycloheptane triisocyanate and mixtures thereof, more preferably the di- or multi-functional isocyanate is methylene diphenyl diisocyanate.

**12.** An electrically conductive composition according to any of claims 1 to 10, wherein the di- or multi-functional isocyanate is present from 0.5 to 9% by weight of the total weight of the composition, preferably from 0.5 to 7%, and more preferably from 0.75 to 6%.

**13.** An electrically conductive film, comprising an electrically conductive composition according to any of claims 1 to 12.

**14.** An electrically conductive film according to claim 13, wherein the film has one or more layers, and wherein the layer has a thickness from 5 µm to 100 µm, preferably from 7 µm to 80 µm, and more preferably from 8 to 60 µm.

**15.** Use of an electrically conductive composition according to any of the claims 1 to 12 or an electrically conductive film according to claim 13 or 14 as a structural adhesive or to generate an electrically conductive surface onto a non-conductive substrate.
